# EUROPEAN PATENT SPECIFICATION

(11) **EP 4 101 305 B1**
(45) Date of publication and mention of the grant of the patent: **22.01.2025**
(21) Application number: 21801397.7
(22) Date of filing: 23.07.2021
(51) Int. Cl.: A23C 11/10, A23C 9/123, A23C 9/137

(54) **PREPARATION METHOD OF A WALNUT YOGURT**
VERFAHREN ZUR HERSTELLUNG VON WALNUSSJOGHURT
PROCÉDÉ DE PRÉPARATION D'UN YAOURT DE NOIX

(30) Priority: 27.04.2021 CN 202110459504
(43) Date of publication of application: 14.12.2022
(73) Proprietor: Institute of Food Science and Technology, Chinese Academy of Agricultural Sciences, 100193 Beijing (CN)
(72) Inventor: WANG, Qiang, Beijing 100193 (CN); JIAO, Bo, Beijing 100193 (CN); FU, Weiming, Beijing 100193 (CN); ZHANG, Yu, Beijing 100193 (CN)
(74) Representative: Dilg, Haeusler, Schindelmann Patentanwaltsgesellschaft mbH
(86) International application number: PCT/CN2021/108120
(87) International publication number: WO 2022/227304

(56) References cited:
- CN-A- 104 206 528
- CN-A- 104 886 256
- CN-A- 104 886 256
- CN-A- 105 994 655
- CN-A- 108 713 594
- CN-A- 108 935 684
- CN-A- 108 935 684
- CN-A- 109 329 437
- CN-A- 109 329 437
- CN-A- 109 463 455
- CN-A- 110 583 789

## Description

### Technical Field

The present invention relates to the technical field of food processing, specifically, to a preparation method of a walnut yogurt.

### Background Art

Walnut, also known as *Juglans regia,* is one of the four major nuts. It has high nutritional value and economic value, and is a kind of medicine and food homologous food. The main components of walnut kernels are fat and protein, and the fat content is up to 60% to 70%, wherein unsaturated fatty acids such as oleic acid, linoleic acid and linolenic acid account for more than 90% of the total fatty acids, and the protein content is up to 15% to 20%. Moreover, walnut protein contains 18 amino acids, of which the content of 8 essential amino acids is very high. In addition, walnut also contains a variety of trace elements such as potassium, calcium, iron, manganese, zinc, copper, and selenium, as well as vitamins such as folic acid, niacin, and pantothenic acid. Therefore, walnut has the effects of anti-oxidation, anti-fatigue, preventing cardiovascular and cerebrovascular diseases, and reducing the risk of diabetes.

Yogurt is one of the favorite foods of consumers, but milk contains relatively high cholesterol and saturated fatty acids. Today, when the whole people are pursuing health, yogurt can no longer fully meet the needs of consumers. However, plant-based yogurt has the characteristics of high protein content and zero cholesterol, and has broad prospects in future fermented beverage products.

If yogurt can be prepared from walnut as a plant-based raw material, due to the action of microorganisms, the macromolecular substances such as fat and protein in walnut yogurt will be partially decomposed into small molecules that are easier to absorb and have strong functional activity, and meanwhile, the acid- and aroma-producing characteristics of lactic acid bacteria make the products have obvious fermentation flavor and have great development potential. However, due to the high fat content in walnut, there are problems of instability and easy layering of yogurt when fermentation is directly performed with walnut as a raw material. Moreover, with walnut as a raw material of plant origin, it is difficult to ferment and prepare a pure fermentative yoghurt with ideal flavor, taste and color. For most of the existing technologies, the pure fermentative yoghurt is used in a fermented milk beverage, which is added with various additives such as sugar and stabilizers and is far inferior to the pure fermentative yoghurt in terms of nutrition and health. CN108935684A discloses the preparation process of the walnut yoghourt comprising the following steps: a, raw material treatment comprising degreasing walnut kernels until the fat content is 40-45% ; b, pulping; c, proportioning; d, degassing and homogenization; e, heating for sterilization; f,inoculation; g, fermentation; and h, freezing and after-ripening, wherein the fermentation material is prepared by mixing lactobacillus bulgaricus freeze-dried powder and streptococcus thermophilus freeze-dried powder according to a weight ratio of 1:1.2 in the step g.

CN109463455A discloses a method of preparing a awalnut polypeptide yogurt, compriseing the following steps of removing inner seed peel of walnut kernels, performing drying, performing cold pressing, and taking the walnut meal rich in protein; performing coarse grinding on the walnut meal, performing superfine crushing, performing blanching, performing enzymolysis, adding auxiliary materials, performing high-pressure homogenizing, making fermentation raw acid, performing pasteurization, performing species compounding, performing species acclimation, performing inoculating with the composite lactic acid bacteria and performing fermentation with the lactic acid bacteria. CN104886256A and CN110583789A disclose pure walnut fermented milks.

### Summary of the Invention

The present invention provides a preparation method of a walnut yogurt with ideal flavor, stable quality and high nutritional value, which comprises the following steps:
1) roasting peeled walnut kernels at 145°C to 165°C for 5 to 25 min;
2) degreasing the roasted walnut kernels until the fat content is 20% to 50% to obtain semi-degreased walnut kernels;
3) mixing the semi-degreased walnut kernels with a stabilizer, a carbon source and water and then milling the resultant to obtain a walnut slurry; and
4) subjecting the walnut slurry to sufficient mixing, sterilization, inoculation, and fermentation to obtain the walnut yogurt.

It is found in the present invention that by degreasing the walnut to control the fat content in the above range further assisted by the roasting treatment as mentioned above on the materials before degreasing, it can be ensured that the obtained yogurt has a good aroma and flavor on the basis of ensuring the stability of the obtained yogurt, and a walnut yogurt that is close to the traditional animal-derived yogurt in terms of taste, flavor, stability and the like can be prepared.

Preferably, the following operation is also included: adding 0.5% to 3% by mass of walnut oil obtained by hot pressing at 150°C to 200°C and then cooling to the walnut slurry. Hot pressing of walnut oil will cause a certain loss of nutrients therein. Therefore, cold pressing is generally used in the prior art, but the aroma of the oil will be significantly enhanced after hot pressing. With the above addition of a small amount of walnut oil, the aroma of yogurt can be significantly improved.

Further preferably, after adding the walnut oil, the slurry is subjected to high-speed shearing under the condition of 5,000 to 20,000 r/min for 2 to 15 min.

Preferably, the stabilizer is one or a combination of at least two of diacetyl tartaric acid ester of mono(di)glycerides, hydroxypropyl distarch phosphate, sodium carboxymethyl cellulose, agar, pectin or gellan gum. After high-temperature roasting treatment, part of the protein in the walnut will be denatured, so the stability of the system after fermentation will be deteriorated than that without roasting. The addition of a stabilizer can further improve the stability of the system, especially the addition of the above stabilizer can effectively improve the stability of the system.

Further preferably, based on the mass of the walnut slurry, the stabilizer is added at the following amount: 0.05 to 0.5 wt% for diacetyl tartaric acid ester of mono(di)glycerides, 0.5 to 3 wt% for hydroxypropyl distarch phosphate, 0.05 to 0.5 wt% for sodium carboxymethyl cellulose, 0.05 to 0.5 wt% for agar, 0.05 to 0.5 wt% for pectin, and 0.05 to 0.5 wt% for gellan gum.

More preferably, based on the mass of the walnut slurry, the stabilizer comprises 1.5 wt% of hydroxypropyl distarch phosphate, 0.3 wt% of sodium carboxymethyl cellulose and 0.1 wt% of agar; or 0.05 wt% of diacetyl tartaric acid ester of mono(di)glycerides, 0.08 wt% of hydroxypropyl distarch phosphate and 0.3 wt% of pectin; or 0.15 wt% of pectin and 0.3 wt% of gellan gum.

Preferably, in the step 4), the sufficient mixing is performed by high-pressure-homogenization, and after a first homogenization is performed under the pressure condition of 20 to 70 MPa, a second homogenization is performed under a pressure which is 10 to 20 MPa higher than the pressure in the first homogenization. The stability of the system can be effectively improved, and the color of yogurt can be effectively improved by the above-mentioned homogenization treatment.

Preferably, the degreasing treatment in the step 2) is specifically as follows: hydraulic pressing is performed under the condition of a pressure of 6 to 22 MPa. Hydraulic pressing will not have a significant impact on the quality of fat, and can ensure the nutritional value of yogurt.

Preferably, in the step 3), the carbon source is sucrose or glucose or a combination of the two; and the addition amount of the carbon source is 1% to 8% by mass of the walnut slurry.

Further preferably, the mass ratio of the walnut kernels to the water is 1:(4-15).

Preferably, the milling rotational speed is 20,000 to 40,000 r/min and the temperature of milling is 40°C to 75°C during the milling process in the step 3).

Preferably, the specific operation of the sterilization is as follows: heating materials to 85°C to 95°C and sterilizing for 15 to 20 min.

Preferably, in the inoculation process, strains *Streptococcus thermophilus* and *Lactobacillus plantarum* are used. The addition of *Lactobacillus plantarum* can enhance the acid-producing performance in walnut yogurt.

Further preferably, the *Streptococcus thermophilus* and *Lactobacillus plantarum* are compounded at a cell number ratio of 1 :(1-5).

Preferably, the specific operation of the fermentation is as follows: adding a starter culture at 3×10⁷ to 7×10⁷ CFU/mL to the sterilized materials, and fermenting at 35°C to 45°C until the acidity reaches 70°T.

Preferably, an after-ripeness operation is further included after the fermentation is completed, and specifically, the after-ripeness operation is as follows: rapidly cooling the walnut yogurt to 4°C, and storing at 4°C to 6°C for 12 h. By the above operation, the further growth of microorganisms can be inhibited, and meanwhile, the activity of enzymes can be reduced to prevent excessive acid production; such that, the state of yogurt can be more stable, the production of flavor substances can be facilitated, and the taste of yogurt can be increased.

The invention is defined by the appended set claims.

The present invention has the following beneficial effects:
1) The present invention uses partial degreasing technology to retain walnut fat to the greatest extent and increase the relative protein content of raw materials. In order to compensate for the influence of lipid deficiency on aroma, roasting treatment is introduced in the pre-treatment, so that the aroma of walnut in the product is activated. Meanwhile, because the walnut itself is rich in fat, protein and sugar, the Maillard reaction is promoted by roasting, so that the final yogurt obtains a special roasting aroma and light caramel color, which further improves the sensory quality of the product. In addition, the inventor found that because the early roasting will cause partial denaturation of protein and variation of sugar content, which will have a certain impact on the later fermentation, the roasting condition is controlled at 145°C to 165°C, and the degree of degreasing is degreasing to the fat content of 20% to 50%, which can effectively take into account the overall quality of the product such as stability, flavor, color and taste, to obtain a walnut yogurt of ideal quality.
2) The walnut oil obtained by pressing by semi-degreasing technology in the present invention can be reprocessed and utilized in the form of raw materials of walnut yogurt or further prepared into walnut oil finished products, which reduces the cost of product raw materials and enriches the utilization of by-products.
3) The fermentation temperature and the fermentation time involved in the present invention are consistent with the fermentation conditions required for traditional yogurt, which is easy to industrialize.
4) The semi-degreased roasted walnut yogurt prepared by the present invention has a smooth mouthfeel, a fine texture close to that of traditional yogurt, and can meet the needs of consumers.

### Specific Modes for Carrying Out the Embodiments

The following Examples are intended to illustrate the present invention, but are not intended to limit the scope of the present invention.

### Example 1

The present Example relates to a preparation method of a walnut yogurt, comprising the following steps:
(1) peeled walnut kernels were roasted at 160°C for 15 min, and cooled to room temperature for later use;
(2) the roasted walnut kernels were pressed at 6 MPa for 15 min to obtain semi-degreased roasted walnuts with a fat content of 49.61%;
(3) the semi-degreased roasted walnuts obtained in step (2) were mixed with auxiliary materials, carbon source and water and then milled to obtain a walnut slurry, wherein the mass ratio of semi-degreased roasted walnuts to water in the walnut slurry was 1: 13; based on the mass of the walnut slurry, the auxiliary materials were added at the following amount: 0.05 wt% of diacetyl tartaric acid ester of mono(di)glycerides, 0.08 wt% of hydroxypropyl distarch phosphate, and 0.3 wt% of pectin; the carbon source was 8 wt% of sucrose; the water was purified water; the milling rotational speed was 36,000 r/min; and the milling temperature was 40°C;
(4) after heating hot-pressed walnut oil to 140°C and cooling, the hot-pressed walnut oil was added at an amount of 0.5% by mass of the walnut slurry obtained in step (3), and high-speed shearing was performed at 10,000 r/min for 3 min to obtain a walnut emulsion;
(5) the walnut emulsion obtained in step (4) was subjected to high pressure homogenization under a pressure of 20 MPa, then homogenization again under a pressure of 40 MPa to obtain a walnut fermentation broth;
(6) the walnut fermentation broth obtained in step (5) was heated to 90°C and sterilized for 15 min;
(7) a compounded starter culture was added at 4 × 10⁷ CFU/mL into the sterilized fermentation broth obtained in step (6), and fermentation was performed at 40°C until the acidity reached 70 °T; the compounded starter culture was composed of *Streptococcus thermophilus* and *Lactobacillus plantarum* at a ratio of 4:3; and
(8) the walnut yogurt from step (7) was rapidly cooled to 4°C, and stored at 4°C for 12 h for after-ripeness to obtain the semi-degreased roasted walnut yogurt.

The semi-degreased roasted walnut yogurt prepared according to the above method had a protein content of 4.4%, a fat content of 4.04%, and a carbohydrate content of 6.2%.

### Example 2

The present Example relates to a preparation method of a walnut yogurt, comprising the following steps:
(1) peeled walnut kernels were roasted at 145°C for 20 min, and cooled to room temperature for later use;
(2) the roasted walnut kernels were pressed at 8 MPa for 40 min to obtain semi-degreased roasted walnuts with a fat content of 40%;
(3) the semi-degreased roasted walnuts obtained in step (2) were mixed with auxiliary materials, carbon source and water and then milled to obtain a walnut slurry, wherein the mass ratio of semi-degreased roasted walnuts in the walnut slurry to water was 1: 10; based on the mass of the walnut slurry, the auxiliary materials were added at the following amount: 1.5 wt% of hydroxypropyl distarch phosphate, 0.3 wt% of sodium carboxymethyl cellulose, and 0.1 wt% of agar; the carbon source was 5 wt% of glucose; the water was purified water; the milling rotational speed was 30,000 r/min; and the milling temperature was 50°C;
(4) after heating hot-pressed walnut oil to 200°C and cooled, the hot-pressed walnut oil was added at an amount of 3% by mass of the walnut slurry obtained in step (3), and high-speed shearing was performed at 13,000 r/min for 10 min to obtain a walnut emulsion;
(5) the walnut emulsion obtained in step (4) was subjected to high pressure homogenization under a pressure of 30 MPa, then homogenization again under a pressure of 70 MPa to obtain a walnut fermentation broth;
(6) the walnut fermentation broth obtained in step (5) was heated to 92°C and sterilized for 20 min; a compounded starter culture was added at 5 × 10⁷ CFU/mL into the sterilized fermentation broth obtained in step (6), and fermentation was performed at 37°C until the acidity reached 70 °T; the compounded starter culture was composed of *Streptococcus thermophilus* and *Lactobacillus plantarum* at a ratio of 1:2;
(7) the walnut yogurt in step (6) was rapidly cooled to 4°C, and stored at 4°C for 12 h for after-ripeness to obtain the semi-degreased roasted walnut yogurt; and
(8) the semi-degreased roasted walnut yogurt prepared according to the above method had a protein content of 4.2%, a fat content of 6.64%, and a carbohydrate content of 5.3%.

### Example 3

The present Example relates to a preparation method of a walnut yogurt, comprising the following steps:
(1) peeled walnut kernels were roasted at 165°C for 5 min, and cooled to room temperature for later use;
(2) the roasted walnut kernels were pressed at 22 MPa for 30 min to obtain semi-degreased roasted walnuts with a fat content of 21%;
(3) the semi-degreased roasted walnuts obtained in step (2) were mixed with auxiliary materials, carbon source and water and then milled to obtain a walnut slurry, wherein the mass ratio of semi-degreased roasted walnuts to water in the walnut slurry was 1: 10; based on the mass of the walnut slurry, the auxiliary materials were added at the following amount: 0.15 wt% of pectin, and 0.3 wt% of gellan gum; the carbon source was 7 wt% of sucrose; the water was purified water; the milling rotational speed was 36,000 r/min; and the milling temperature was 65°C;
(4) after heating hot-pressed walnut oil to 150°C and cooling, the hot-pressed walnut oil was added at an amount of 2% by mass of the walnut slurry obtained in step (3), and high-speed shearing was performed at 15,000 r/min for 12 min to obtain a walnut emulsion;
(5) the walnut emulsion obtained in step (4) was subjected to high pressure homogenization under a pressure of 25 MPa, then homogenization again under a pressure of 40 MPa to obtain a walnut fermentation broth;
(6) the walnut fermentation broth obtained in step (5) was heated to 88°C and sterilized for 20 min;
(7) a compounded starter culture was added at 6 × 10⁷ CFU/mL into the sterilized fermentation broth obtained in step (6), and fermentation was performed at 45°C until the acidity reached 70 °T; the compounded starter culture was composed of *Streptococcus thermophilus* and *Lactobacillus plantarum* at a ratio of 2:3; and
(8) the walnut yogurt in step (7) was rapidly cooled to 4°C, and stored at 4°C for 12 h for after-ripeness to obtain the semi-degreased roasted walnut yogurt.

The semi-degreased roasted walnut yogurt prepared according to the above method had a protein content of 5%, a fat content of 3.9%, and a carbohydrate content of 7.4%.

### Example 4

Compared with Example 1, the present Example differs in that the cooled hot-pressed walnut oil was not added, that is, the operation of step 4) was omitted.

The semi-degreased roasted walnut yogurt prepared according to the above method had a protein content of 4.4%, a fat content of 3.5%, and a carbohydrate content of 6.2%, with relatively light walnut flavor.

### Comparative Example 1

A walnut yogurt was prepared according to preparation process of a walnut yogurt described in CN108935684A (CN201810888504.X). Refer to Example 2 described in CN108935684A for specific preparation steps.

### Comparative Example 2

A walnut yogurt was prepared according to a pure walnut yogurt and preparation method thereof described in CN104886256A (CN201510329886.9).

Refer to Example 2 described in CN104886256A for specific preparation steps.

### Comparative Example 3

A walnut yogurt was prepared according to a fermentation method of a pure walnut yogurt described in CN110583789A (CN201911005491.8). Refer to Example 2 described in CN110583789A for specific preparation steps

### Comparative Example 4

Compared with Example 1, the present Comparative Example differs in that the walnut kernels were not roasted at a high temperature, that is, the operation of step 1) was omitted.

### Comparative Example 5

Compared with Example 1, the present Comparative Example differs in that the roasting temperature in step 1) was 170°C.

### Comparative Example 6

Compared with Example 1, the present Comparative Example differs in that in the step 2), degreasing was performed until the fat content was 15%.

### Comparative Example 7

The yogurt already on the market was purchased, and the ingredients of the yogurt were raw milk, *Lactobacillus thermophilus, Lactobacillus bulgaricus* and sucrose.

### Experimental Example

The tissue morphology of the semi-degreased roasted walnut yogurt prepared in Examples 1-4 and the walnut yogurt prepared in Comparative Examples 1-7 were subjected to sensory evaluation, respectively. The sensory evaluation was performed by 10 panelists according to the standards in Table 1, and the color, smell, taste and texture were described and analyzed.

The scoring standard was as follows: five items including color, smell, taste, texture, and overall acceptability were scored on a 10-point scale, wherein 10 represents the best and 1 represents the worst; and it was ensured that other conditions are consistent.

The sensory evaluation results of the tissue morphology of the semi-degreased roasted walnut yogurt prepared in Examples 1-4 and Comparative Examples 1-7 were shown in Table 2.

**Table 1: Sensory scoring standard for semi-degreased roasted walnut yogurt**

| Items | Features | Score |
|---|---|---|
| Color | Uniform color, creamy white or creamy yellow | 8-10 |
| | Nonuniform color, brown or gray. | 4-7 |
| | Nonuniform color, colored spots or other abnormal colors | 1-3 |
| Smell | Strong walnut milk aroma, no peculiar smell | 8-10 |
| | Light walnut milk aroma, no peculiar smell | 4-7 |
| | No walnut milk aroma, slight other smell | 1-3 |
| Taste | Moderate sweet-sour ratio, walnut flavor, no bitterness and astringency | 8-10 |
| | Slightly sour or sweet, light walnut flavor, light bitterness and astringency | 4-7 |
| | Too sour or too sweet, slight walnut flavor, slight bitterness and astringency | 1-3 |
| Texture | Fine and uniform tissue, smooth surface, no precipitated whey | 8-10 |
| | Uniform tissue, small amount of precipitated whey | 4-7 |
| | Rough tissue, precipitated whey | 1-3 |
| Overall acceptability | Very good | 8-10 |
| | Fair | 4-7 |
| | Very poor | 1-3 |

**Table 2: Sensory index comparison of semi-degreased roasted walnut yogurt prepared by different Examples and Comparative Examples**

| Items | Color | Smell | Taste | Texture | Overall acceptabilit y | Tissue status |
|---|---|---|---|---|---|---|
| Example 1 | 8 | 8 | 9 | 9 | 9 | Fine tissue, smooth texture, sticky, substantially no precipitated whey |
| Example 2 | 9 | 9 | 9 | 9 | 9 | Fine tissue, soft texture, smooth surface, no precipitated whey |
| Example 3 | 8 | 8 | 8 | 9 | 8 | Relatively fine tissue, soft texture, relatively refreshing, small amount of precipitated whey |
| Example 4 | 8 | 5 | 6 | 8 | 7 | Relatively fine tissue, but slightly hard texture, small amount of precipitated whey |
| Comparative Example 1 | 8 | 8 | 9 | 8 | 9 | Fine tissue, smooth texture, no whey separation |
| Comparative Example 2 | 8 | 6 | 7 | 5 | 6 | Fine tissue, soft texture, relatively thin overall morphology, relatively serious whey precipitation |
| Comparative Example 3 | 8 | 8 | 6 | 6 | 7 | Bad curd formation status, relatively thin overall morphology, obvious whey precipitation |
| Comparative Example 4 | 6 | 3 | 4 | 7 | 5 | Relatively fine tissue, soft texture, substantially no whey precipitation |
| Comparative Example 5 | 4 | 4 | 4 | 3 | 2 | Substantially no curd, fluid texture |
| Comparative Example 6 | 7 | 5 | 5 | 3 | 4 | Rough tissue, hard texture, whey precipitation and obvious granular sensation |
| Comparative Example 7 | 9 | 9 | 9 | 9 | 9 | Fine tissue, soft and elastic texture, substantially no whey precipitation |

It can be seen from Table 2 that the semi-degreased roasted walnut yogurt prepared in Examples 1-4 of the present invention has better sensory evaluation and higher overall acceptability than the walnut yogurt prepared in Comparative Examples 2-5. The semi-degreased roasted walnut yogurt prepared in Examples 1-3 of the present invention has creamy white or creamy yellow color, uniform color, soft texture, fine tissue, substantially no whey precipitation, and smooth mouthfeel, and its mouthfeel, texture, color and the like are close to the commercially available yogurt (such as Comparative Example 7). However, the walnut yogurt prepared in Example 4 lacks the addition of high-temperature walnut oil, so it is not good in smell and taste. The walnut yogurt prepared in Comparative Example 1 has fine texture, smooth texture and no whey precipitation, and its better texture formation may be related to the use of skimmed milk powder as an ingredient. Therefore, in essence, the yogurt prepared in Comparative Example 1 is not pure walnut yogurt. Although the pure walnut yogurt prepared in Comparative Example 2 has fine texture and soft texture, the overall morphology is relatively thin and the whey precipitation is relatively serious, leads to obvious layering of emulsion. The pure walnut yogurt prepared in Comparative Example 3 is not good in curd formation status, the overall morphology is relatively thin and there is a relatively obvious problem of whey precipitation. Due to lacking of the roasting step, the semi-degreased roasted walnut yogurt prepared in Comparative Example 4 has gray product color, and there are unpleasant flavors such as raw odor and obvious grassy odor in smell and taste. The roasting conditions of Comparative Example 5 are relatively intense, so the color of the product is dark brown and there is an obvious burnt smell. Meanwhile, the excessively high roasting temperature results in denaturation of basically all of the raw proteins, and curd is not formed at the end of fermentation, which is very different from the desired sensory properties of the product. Comparative Example 6 has the lowest fat content, so the relative content of protein is greatly increased. After fermentation, the texture of the product is too hard, and the powdery sensation and granular sensation are obviously enhanced, which has a negative impact on the sensory experience.

**Table 3: Comparison of quality indexes of walnut yogurt prepared in different Examples and Comparative Examples**

| Items | Acidity (°T) | pH | Water holding capacity (%) |
|---|---|---|---|
| Example 1 | 73.24±0.34 | 4.26±0.25 | 79.04±0.66 |
| Example 2 | 75.12±0.22 | 4.19±0.08 | 80.23±1.43 |
| Example 3 | 74.32±1.55 | 4.23±0.56 | 77.56±0.22 |
| Example 4 | 73.74±1.23 | 4.21±0.43 | 78.73±0.35 |
| Comparative Example 1 | 76.23±2.64 | 4.13±0.88 | 85.34±2.61 |
| Comparative Example 2 | 64.98±0.79 | 4.45±0.73 | 56.98±2.33 |
| Comparative Example 3 | 36.39±1.64 | 4.74±0.96 | 68.42±0.96 |
| Comparative Example 4 | 77.40±1.31 | 4.16±0.49 | 77.46±1.42 |
| Comparative Example 5 | 49.02±0.45 | 4.75±0.05 | 46.33±1.84 |
| Comparative Example 6 | 76.51±0.97 | 4.18±0.34 | 80.39±0.61 |
| Comparative Example 7 | 78.90±0.15 | 4.17±0.02 | 64.38±0.23 |

It can be seen from Table 3 that the degreased roasted walnut yogurt prepared in Examples 1-4 of the present invention has similar acidity, pH and water holding capacity to those of the walnut yogurt prepared in Comparative Examples 1, 4 and 6, indicating that semi-degreasing and roasting treatment can reduce the fat content of the raw materials, increase the flavor of the product without affecting the acid-producing capacity of the lactic acid bacteria, and can increase the water holding capacity of the product, which has a positive effect on the improvement of product stability. Compared with the commercially available animal yogurt of Comparative Example 7, Examples 1-4 of the present invention have similar acidity and higher water holding capacity, indicating that the product can simulate traditional yogurt in terms of texture, tissue state and taste, and has better stability. Meanwhile, compared with the pure walnut yogurt prepared in Comparative Examples 2, 3 and 5, the semi-degreased roasted walnut yogurt prepared in Examples 1-4 of the present invention has higher acidity, lower pH value and better water holding capacity, indicating that the semi-degreased roasted walnut yogurt prepared in Examples 1-4 of the present invention can compensate for the defects of insufficient acid production, poor taste and poor texture of walnut yogurt by technical improvements. Meanwhile, it is also proved that the technical means of semi-degreasing in combination with roasting in Examples 1-4 of the present invention can solve the problem that the raw materials must contain animal derived components in order to obtain better texture, sensory and rheological properties, and thus the raw material cost in the production process is reduced, and a new possibility for the development of pure plant-based yogurt is provided.

Although the present invention has been described in detail with general description, specific embodiments and experiments above, it is obvious to a person skilled in the art that some modifications or improvements can be made on the basis of the present invention.

### Industrial applicability

The present invention provides a walnut yogurt and a preparation method thereof. The preparation method of the present invention comprises the following steps: 1) roasting peeled walnut kernels at 145°C to 165°C for 5 to 25 min; 2) degreasing the roasted walnut kernels until the oil content is 20% to 50% to obtain semi-degreased walnut kernels; 3) mixing the semi-degreased walnut kernels with a stabilizer, a carbon source and water and then milling the resultant to obtain a walnut slurry; and 4) subjecting the walnut slurry to sufficient mixing, sterilization, inoculation, and fermentation to obtain the walnut yogurt. The present invention can effectively improve the aroma of walnuts after roasting at high temperature. On this basis, the ideal flavor of the system can be ensured after removing part of the fat. Moreover, a yogurt with stable quality and rich nutritional value can be obtained by removing fat to the above degree, which has a good economic value and application prospects.

## Claims

1. A preparation method of a walnut yogurt, comprising the following steps:
1) roasting peeled walnut kernels at 145°C to 165°C for 5 to 25 min;
2) degreasing the roasted walnut kernels until the fat content is 20% to 50% to obtain semi-degreased walnut kernels;
3) mixing the semi-degreased walnut kernels with a stabilizer, a carbon source and water and then milling the resultant to obtain a walnut slurry; and
4) subjecting the walnut slurry to sufficient mixing, sterilization, inoculation, and fermentation to obtain the walnut yogurt.

2. The preparation method according to claim 1, further comprising an operation of adding 0.5% to 3% by mass of walnut oil obtained by hot pressing at 150°C to 200°C and then cooling to the walnut slurry in step 3);
preferably, the walnut sturry added with the walnut oil is subjected to high-speed shearing under the condition of 5,000 to 20,000 r/min for 2 to 15 min.

3. The preparation method according to claim 1 or 2, wherein the stabilizer is one or a combination of at least two of diacetyl tartaric acid ester of mono(di)glycerides, hydroxypropyl distarch phosphate, sodium carboxymethyl cellulose, agar, pectin or gellan gum;
preferably, based on the mass of the walnut slurry, the stabilizer is added at the following amount: 0.05 to 0.5 wt% for diacetyl tartaric acid ester of mono(di)glycerides, 0.5 to 3 wt% for hydroxypropyl distarch phosphate, 0.05 to 0.5 wt% for sodium carboxymethyl cellulose, 0.05 to 0.5 wt% for agar, 0.05 to 0.5 wt% for pectin, and 0.05 to 0.5 wt% for gellan gum.

4. The preparation method according to claim 1 or 2, wherein, in the step 4), the sufficient mixing is performed by homogenization, and after a first homogenization is performed under the pressure condition of 20 to 70 MPa, a second homogenization is performed under a pressure which is 10 to 20 MPa higher than the pressure in the first homogenization.

5. The preparation method according to claim 1 or 2, wherein, the degreasing treatment in the step 2) is specifically as follows: hydraulic pressing is performed under the condition of a pressure of 6 to 22 MPa.

6. The preparation method according to claim 1 or 2, wherein, in the step 3), the carbon source is sucrose or glucose or a combination of sucrose or glucose; and the addition amount of the carbon source is 1 to 8%) by mass of the walnut slurry;
preferably, the mass ratio of tbe semi-degreased walnut kernels to water is 1:(4-15).

7. The preparation method according to claim 1 or 2, wherein, the specific operation of the sterilization is as follows: heating materials to 85°C 95°C and sterilizing for 15 to 20 min.

8. The preparation method according to claim 1 or 2, wherein, strains *Streptococcus thermophilus* and *Lactobacillus plant arum* are used for the inoculation, preferably, the *Streptococcus thermophilus* and *Lactobacillus plantarum* are compounded at a cell number ratio of 1:1 to 1:5.

9. The preparation method according to claim 1 or 2, wherein, an after-ripeness operation is further included after the fermentation is completed, and specifically, the after-ripeness operation is as follows: rapidly cooling the walnut yogurt to 4°C, and storing at 4°C to 6°C for 12 h.

## Patentansprüche

1. Ein Herstellungsverfahren für einen Walnussjoghurt, aufweisend die folgenden Schritte:
1) Rösten geschälter Walnusskerne bei 145°C bis 165°C für 5 bis 25 Minuten;
2) Entfetten der gerösteten Walnusskerne, bis der Fettgehalt 20% bis 50% beträgt, um halbentfettete Walnusskerne zu erhalten;
3) Mischen der halbentfetteten Walnusskerne mit einem Stabilisator, einer Kohlenstoffquelle und Wasser und dann Mahlen des Ergebnisses, um eine Walnussaufschlämmung zu erhalten; und
4) Unterziehen der Walnussaufschlämmung einem ausreichenden Mischen, Sterilisieren, Impfen und Fermentieren, um den Walnussjoghurt zu erhalten.

2. Das Herstellungsverfahren gemäß Anspruch 1, ferner aufweisend einen Vorgang des Zugebens von 0,5 bis 3 Massen-% an Walnussöl, erhalten durch Heißpressen bei 150°C bis 200°C und dann Abkühlen zu der Walnussaufschlämmung in Schritt 3);
vorzugsweise wird die Walnussaufschlämmung, zugegeben mit dem Walnussöl, einer Hochgeschwindigkeitsscherung unter der Bedingung von 5.000 bis 20.000 U/min für 2 bis 15 min unterzogen.

3. Das Herstellungsverfahren gemäß Anspruch 1 oder 2, wobei der Stabilisator einer oder eine Kombination von mindestens zwei von Diacetylweinsäureester von Mono(di)glyceriden, Hydroxypropyldistärkephosphat, Natriumcarboxymethylcellulose, Agar, Pektin oder Gellangummi ist;
vorzugsweise wird, basierend auf der Masse der Walnussaufschlämmung, der Stabilisator in der folgenden Menge zugegeben: 0,05 bis 0,5 Gew.-% für Diacetylweinsäureester von Mono(di)glyceriden, 0,5 bis 3 Gew.-% für Hydroxypropyldistärkephosphat, 0,05 bis 0,5 Gew.-% für Natriumcarboxymethylcellulose, 0,05 bis 0,5 Gew.-% für Agar, 0,05 bis 0,5 Gew.-% für Pektin und 0,05 bis 0,5 Gew.-% für Gellangummi.

4. Das Herstellungsverfahren gemäß Anspruch 1 oder 2, wobei, in Schritt 4), das ausreichende Mischen durch Homogenisierung durchgeführt wird, und nachdem eine erste Homogenisierung unter der Druckbedingung von 20 bis 70 MPa durchgeführt wird, eine zweite Homogenisierung unter einem Druck durchgeführt wird, der 10 bis 20 MPa höher als der Druck in der ersten Homogenisierung ist.

5. Das Herstellungsverfahren gemäß Anspruch 1 oder 2, wobei die Entfettungsbehandlung in Schritt 2) spezifisch wie folgt ist: hydraulisches Pressen wird unter der Bedingung eines Drucks von 6 bis 22 MPa durchgeführt.

6. Das Herstellungsverfahren gemäß Anspruch 1 oder 2, wobei, in Schritt 3), die Kohlenstoffquelle Saccharose oder Glukose oder eine Kombination aus Saccharose oder Glukose ist; und die Zugabemenge der Kohlenstoffquelle 1 bis 8 Massen-% der Walnussaufschlämmung ist;
vorzugsweise ist das Massenverhältnis der halbentfetteten Walnusskerne zu Wasser 1:(4-15).

7. Das Herstellungsverfahren gemäß Anspruch 1 oder 2, wobei der spezifische Vorgang des Sterilisierens wie folgt ist: Erwärmen von Materialien auf 85°C bis 95°C und Sterilisieren für 15 bis 20 min.

8. Das Herstellungsverfahren gemäß Anspruch 1 oder 2, wobei die Stämme *Streptococcus thermophilus* und *Lactobacillus plantarum* für das Impfen verwendet werden, vorzugsweise sind *Streptococcus thermophilus* und *Lactobacillus plantarum* in einem Zellzahlverhältnis von 1:1 bis 1:5 zusammengesetzt.

9. Das Herstellungsverfahren gemäß Anspruch 1 oder 2, wobei ferner ein Nachreifevorgang eingeschlossen ist, nachdem die Fermentation abgeschlossen ist, und insbesondere ist der Nachreifevorgang wie folgt: schnelles Abkühlen des Walnussjoghurts auf 4°C und Lagern bei 4°C bis 6°C für 12 h.

## Revendications

1. Procédé de préparation d'un yaourt aux noix, comprenant les étapes suivantes consistant à :
1) torréfier des cerneaux de noix sans peau entre 145°C et 165°C pendant 5 à 25 min ;
2) dégraisser les cerneaux de noix torréfiés jusqu'à ce que la teneur en matières grasses soit de 20 % à 50 % pour obtenir des cerneaux de noix semi-dégraissés ;
3) mélanger les cerneaux de noix semi-dégraissés avec un stabilisant, une source de carbone et de l'eau, puis broyer le résultat pour obtenir une suspension de noix ; et
4) soumettre la suspension de noix à un mélange, une stérilisation, une inoculation et une fermentation suffisants pour obtenir le yaourt aux noix.

2. Procédé de préparation selon la revendication 1, comprenant en outre une opération consistant à ajouter 0,5 % à 3 % en masse d'huile de noix obtenue par pressage à chaud entre 150°C et 200°C, puis à refroidir la suspension de noix dans ladite étape 3) ;
de préférence, la suspension de noix à laquelle de l'huile de noix a été ajoutée est soumise à un cisaillement à grande vitesse dans la condition de 5 000 à 20 000 tours/minute pendant 2 à 15 minutes.

3. Procédé de préparation selon la revendication 1 ou 2, dans lequel le stabilisant est un ou une combinaison d'au moins deux parmi l'ester d'acide diacétyltartrique de mono(di)glycérides, le phosphate d'hydroxypropyldiamidon, la carboxyméthylcellulose de sodium, la gélose, la pectine ou la gomme gellane ;
de préférence, sur la base de la masse de la suspension de noix, le stabilisant est ajouté à la quantité suivante : de 0,05 à 0,5 % en poids pour l'ester d'acide diacétyltartrique de mono(di)glycérides, de 0,5 à 3 % en poids pour le phosphate d'hydroxypropyldiamidon, de 0,05 à 0,5 % en poids pour la carboxyméthylcellulose de sodium, de 0,05 à % en poids pour la gélose, de 0,05 à 0,5 % en poids pour la pectine et 0,05 à 0,5 % en poids pour la gomme gellane.

4. Procédé de préparation selon la revendication 1 ou 2, dans lequel, dans ladite étape 4), le mélange suffisant est effectué par homogénéisation, et après qu'une première homogénéisation soit effectuée dans la condition de pression de 20 à 70 MPa, une seconde homogénéisation est effectuée sous une pression qui est de 10 à 20 MPa supérieure à la pression dans la première homogénéisation.

5. Procédé de préparation selon la revendication 1 ou 2, dans lequel le traitement de dégraissage dans l'étape 2) est spécifiquement comme suit : un pressage hydraulique est effectué dans la condition d'une pression de 6 à 22 MPa.

6. Procédé de préparation selon la revendication 1 ou 2, dans lequel, à l'étape 3), la source de carbone est le saccharose ou le glucose ou une combinaison de saccharose ou de glucose ; et la quantité d'addition de la source de carbone est de 1 à 8 % en masse de la suspension de noix ;
de préférence, le rapport massique des cerneaux de noix semi-dégraissés à l'eau est de 1:(4-15).

7. Procédé de préparation selon la revendication 1 ou 2, dans lequel l'opération spécifique de stérilisation est la suivante : chauffage des matériaux entre 85°C et 95°C et stérilisation pendant 15 à 20 min.

8. Procédé de préparation selon la revendication 1 ou 2, dans lequel les souches *Streptococcus thermophilus* et *Lactobacillus plantarum* sont utilisées pour l'inoculation, de préférence, les souches *Streptococcus thermophilus* et *Lactobacillus plantarum* sont composées selon un rapport de nombre de cellules de 1:1 à 1:5.

9. Procédé de préparation selon la revendication 1 ou 2, dans lequel une opération de post-maturation est en outre incluse après la fin de la fermentation, et en particulier, l'opération de post-maturation est la suivante : refroidissement rapide du yaourt aux noix à 4°C, et stockage entre 4°C et 6°C pendant 12 heures.
